# EUROPEAN PATENT APPLICATION

(11) **EP 4 760 790 A1**
(43) Date of publication of application: **17.06.2026**
(21) Application number: 25222476.1
(22) Date of filing: 11.12.2025
(51) Int. Cl.: H01M 4/04, B02C 18/14

(54) **FIBERIZING EQUIPMENT AND DRY FILM FORMING EQUIPMENT**

(30) Priority: 13.12.2024 CN 202423090258 U
(71) Applicant: AESC Japan Ltd., Yokohama-shi, Kanagawa 220-0012 (JP)
(72) Inventor: GONG, Zhijie, Jiangyin City, Wuxi City, 214443 (CN)
(74) Representative: Becker, Eberhard

(57) **Abstract**

A fiberizing equipment and a dry film forming equipment are provided. The fiberizing equipment includes a fiberizing mechanism (100), an infeed mechanism (200) and a cutting screening mechanism (300). The fiberizing mechanism (100) includes two fiberizing rollers (101) disposed opposite to each other. An infeed gap (102) is formed between the two fiberizing rollers (101). The infeed gap (102) includes an infeed port (1021) and an outfeed port (1022). The infeed mechanism (200) is located above the infeed port (1021). The cutting screening mechanism (300) is located below the outfeed port (1022) and includes a stock bin (301), a shredding component (302), and a screen (303). The screen (303) is located below the shredding component (302).

## Description

### BACKGROUND

### Technical Field

The disclosure relates to the field of dry electrode processing technology, and in particular relates to a fiberizing equipment and a dry film forming equipment.

### Description of Related Art

Currently, common methods of fiberization include high-speed airflow techniques (e.g., jet mills and fluidized beds) or high-speed mechanical shearing methods. These methods involve imparting high-energy mechanical energy into dry-mixed materials through impact, causing the binder to fiberize under stress. However, the high mechanical energy in these methods may lead to damage to the material particles, resulting in issues such as interlayer delamination of graphite, fragmentation of ternary active materials, and detachment of the carbon coating layer on the surface of lithium iron phosphate materials. Furthermore, the material after pre-fiberization tends to form sticky agglomerates, leading to poor consistency in particle size post-fiberization, which adversely affects the consistency of subsequent feeding and film formation. Additionally, excessively large agglomerates may cause material bridging, severely impacting the subsequent film formation process.

Therefore, finding a new method of fiberization is an urgent problem that needs to be addressed.

### SUMMARY

In view of this, the objective of this application is to propose a fiberizing equipment and a dry film forming equipment.

Based on the above objectives, a fiberizing equipment is provided in a first aspect of the disclosure, and the fiberizing equipment comprises the following components.

A fiberizing mechanism includes two fiberizing rollers disposed opposite to each other. An infeed gap is formed between the two fiberizing rollers. The infeed gap includes an infeed port and an outfeed port.

An infeed mechanism is located above the infeed port and is configured for feeding a material to the infeed port.

A cutting screening mechanism is located below the outfeed port and includes a stock bin, a shredding component and a screen. The shredding component and the screen are both located in the stock bin, and the screen is located below the shredding component. The stock bin is configured to receive a material flowing out of the outfeed port. The shredding component is configured to break the material received by the stock bin, and the screen is configured to screen the material broken by the shredding component.

Optionally, the fiberizing mechanism further includes two driving members, which are respectively connected to the two fiberizing rollers, and the driving members are configured to drive the corresponding fiberizing rollers to rotate.

Optionally, the cutting screening mechanism further includes a driving motor. An output shaft of the driving motor penetrates a side wall of the stock bin and extends into the stock bin, and the shredding component is fixed to the output shaft.

Optionally, multiple shredding components are provided, and the shredding components are disposed at intervals along an extension direction of the output shaft.

Optionally, multiple the screens are provided, the screens are disposed at intervals along a direction from the infeed mechanism to the cutting screening mechanism, and an aperture size of screen openings in the screens gradually decreases.

Optionally, a heating element is provided inside each of the fiberizing rollers, and the heating element is configured to heat the fiberizing rollers.

Optionally, a cooling interlayer is provided in the stock bin, and the cooling interlayer is configured to introduce a cooling medium.

Optionally, a size of the infeed gap is 100 um to 5000 um; and/or an outer diameter of the fiberizing roller is 100 to 600 mm; and/or an aperture size of the screen opening of the screen is less than or equal to 500 meshes.

A dry film forming equipment is provided in a second aspect of the disclosure, and the dry film forming equipment includes the aforementioned fiberizing equipment described in any one of the embodiments of the first aspect.

Optionally, a feeding mechanism and a film forming mechanism are further included.

The feeding mechanism is located below the cutting screening mechanism, and includes a feeding channel. The feeding channel includes a feeding port, a feeding gap, and a discharge port disposed in sequence. The feeding channel is configured to allow material flowing out of the cutting screening mechanism to enter from the feeding port and flow out through the discharge port along the feeding gap.

The film forming mechanism is located below the discharge port and is configured to receive the material flowing out of the discharge port and calender the material into a finished film.

As may be seen from the above, a fiberizing equipment and a dry film forming equipment is provided in the disclosure. The fiberizing equipment includes a fiberizing mechanism. The fiberizing mechanism includes two fiberizing rollers disposed opposite to each other. An infeed gap is formed between the two fiberizing rollers. The infeed gap includes an infeed port and an outfeed port. The infeed mechanism is located above the infeed port and is configured to feed the material to the infeed port. The cutting screening mechanism is located below the outfeed port and includes a stock bin, a shredding component, and a screen. A certain extrusion force and shear force are applied to a material flowing through the infeed gap by the fiberizing rollers disposed opposite to each other, so that the material is fiberized without being subjected to strong impact, which may effectively fiberize the material and avoid the damage of material particles caused by strong impact. At the same time, the shredding component in the cutting screening mechanism may break the pre-fiberized material flowing out of the outfeed port to avoid material agglomeration. The broken material may be screened through the screen in the cutting screening mechanism to control the particle size of the material falling from the bottom of the stock bin, thereby improving the particle size consistency of the pre-fiberized particles.

### BRIEF DESCRIPTION OF THE DRAWINGS

In order to more clearly illustrate the technical solutions in this application or related technologies, the following briefly introduces the drawings required for use in the embodiments or related technical descriptions. Obviously, the drawings described below are merely embodiments of this application. For a person of ordinary skill in the art, it is possible to derive other figures from these drawings without engaging in any inventive activity.
FIG. 1 shows a front view of a fiberizing equipment of an embodiment of the disclosure.
FIG. 2 shows a front view of the fiberizing equipment of an embodiment of the disclosure when fiberizing a material.
FIG. 3 is a schematic diagram showing the principle of the fiberizing equipment of an embodiment of the disclosure for fiberizing a material.
FIG. 4 shows a structural schematic diagram of a fiberizing equipment of an embodiment of the disclosure.
FIG. 5 shows a structural schematic diagram of a dry film forming equipment of an embodiment of the disclosure.

### DETAILED DESCRIPTION OF DISCLOSED EMBODIMENTS

To clarify the objectives, technical solutions, and advantages of this disclosure, it is further detailed below with reference to specific embodiments and accompanying drawings.

It should be noted that, unless otherwise defined, technical or scientific terms used in the embodiments of this disclosure should be understood in their usual sense by those skilled in the relevant field of this disclosure. The terms "first," "second," and similar expressions used in the embodiments of this disclosure do not denote any order, quantity, or importance but are merely employed to differentiate between different components. The terms "comprising" or "including" and similar expressions indicate that the elements or objects preceding these words encompass the elements or objects listed thereafter and their equivalents, without excluding other elements or objects. The terms "connected" or "linked" and similar expressions are not limited to physical or mechanical connections but may include electrical connections, whether direct or indirect. The terms "above," "below," "left," "right," etc., are used solely to denote relative positional relationships and may change correspondingly if the absolute position of the described object changes.

The dry electrode processing technology does not require solvent-assisted electrode processing, thereby eliminating the corresponding drying and solvent recovery processes and devices, significantly reducing the investment cost of lithium battery projects, the cost of electrode manufacturing, and the unit carbon footprint of the product. Since its inception, dry electrode equipment has undergone several iterations, with design maturity approaching mass production levels.

The mainstream method for preparing dry electrodes employs the binder fiberization method. This method involves adding active materials and conductive agent powders into a solid binder to form a dry mix, applying high shear forces to fiberize the binder, thereby binding the powders together, compacting and thinning the binder through extrusion to form a self-supporting film, which is then roll-pressed with a current collector to form an electrode. Currently, the adhesive is usually dropped from above into the gap between two rollers arranged opposite to each other on the left and right. The two rollers rotate towards each other to squeeze and form an electrode film, which is then thinned and corrected through multiple stages of calendering to become a finished film.

In dry electrode processes, the pre-fiberization of the binder is extremely critical. Currently, common methods of fiberization include high-speed airflow techniques (e.g., jet mills and fluidized beds) or high-speed mechanical shearing methods. These methods involve imparting high-energy mechanical energy into dry-mixed materials through impact, causing the binder to fiberize under stress. However, the high mechanical energy in these methods may lead to damage to the material particles, resulting in issues such as interlayer delamination of graphite, fragmentation of ternary active materials, and detachment of the carbon coating layer on the surface of lithium iron phosphate materials.

Furthermore, the material after pre-fiberization tends to form sticky agglomerates, leading to poor consistency in particle size post-fiberization, which adversely affects the consistency of subsequent feeding and film formation. Additionally, excessively large agglomerates may cause material bridging, severely impacting the subsequent film formation process.

Therefore, how to provide a new method of fiberization that does not require impacting the material during the pre-fiberization of dry-mixed materials, thus preventing damage to the material particles, while also enhancing the particle size consistency after pre-fibrillation, is an urgent issue that needs to be addressed.

Based on this, a fiberizing equipment is provided in the disclosure.

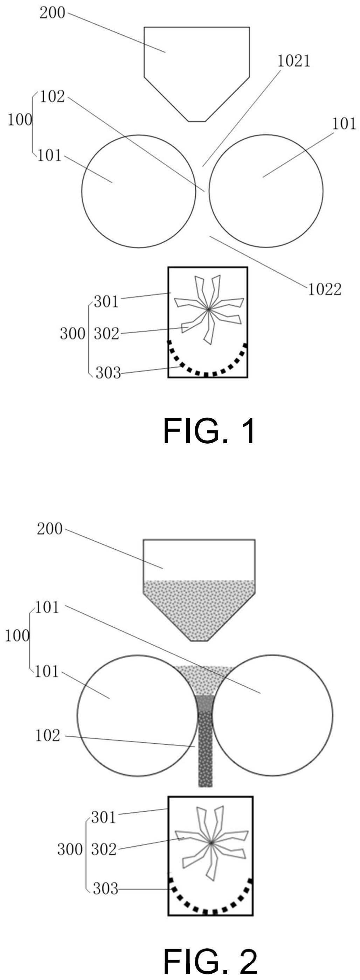

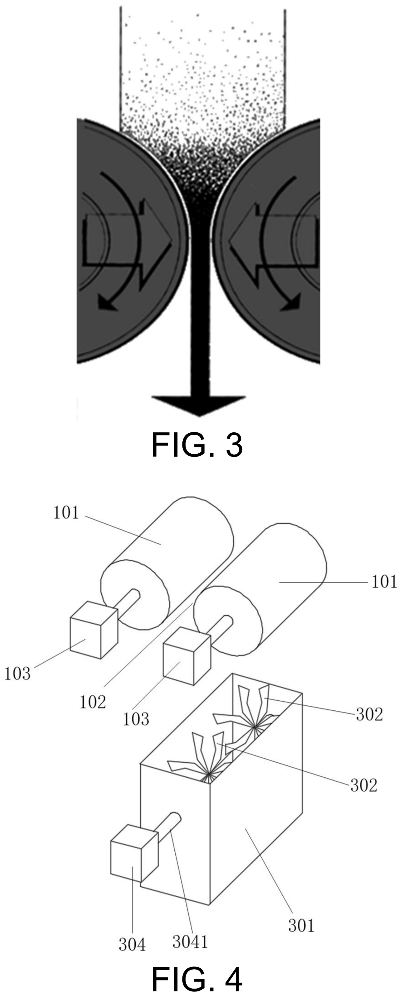

FIG. 1 shows a front view of a fiberizing equipment of an embodiment of the disclosure. FIG. 2 shows a front view of the fiberizing equipment of an embodiment of the disclosure when fiberizing a material. FIG. 3 is a schematic diagram showing the principle of the fiberizing equipment of an embodiment of the disclosure for fiberizing a material.

Referring to FIG. 1, FIG. 2 and FIG. 3, the fiberizing equipment includes the following components.

A fiberizing mechanism 100 includes two fiberizing rollers 101 disposed opposite to each other. An infeed gap 102 is formed between the two fiberizing rollers 101. The infeed gap 102 includes an infeed port 1021 and an outfeed port 1022.

An infeed mechanism 200 is located above the infeed port 1021 and is configured to feed materials to the infeed port 1021.

A cutting screening mechanism 300 is located below the outfeed port 1022 and includes a stock bin 301, a shredding component 302, and a screen 303. The shredding component 302 and the screen 303 are both located in the stock bin 301, and the screen 303 is located below the shredding component 302. The stock bin 301 is configured to receive the material flowing out of the outfeed port 1022. The shredding component 302 is configured to break the material received by the stock bin 301, and the screen 303 is configured to screen the material broken by the shredding component 302.

Specifically, the infeed mechanism 200 is located above the fiberizing mechanism 100, and the infeed mechanism 200 is configured to feed materials into the infeed port 1021 of the infeed gap 102. After the material enters the infeed gap 102 from the infeed port 1021, the material flows along the infeed gap 102. When the material flows in the infeed gap 102, the fiberizing rollers 101, which are disposed opposite to each other and have a certain inter-roller linear pressure between them, apply a certain extrusion force to the material. At the same time, the two continuously rotating fiberizing rollers 101 apply a certain shear force to the material. In this way, the material is fiberized under the influence of the two fiberizing rollers 101.

The fiberized material flows out from the outfeed port 1022 of the infeed gap 102 and falls into the stock bin 301 of the cutting screening mechanism 300. The material entering the stock bin 301 is broken by the shredding component 302 located in the stock bin 301, and then falls into the screen 303 located below the shredding component 302. The material is screened by the screen 303, so that the material particles with a particle size smaller than the aperture size of the screen 303 fall from the bottom of the stock bin 301 and enter the next process, while the material particles with a particle size greater than the aperture size of the screen 303 remain on the screen 303 and do not fall from the bottom of the stock bin 301. In this way, the particle size of the material falling from the bottom of the stock bin 301 may be controlled by the screen 303, thereby improving the particle size consistency of the pre-fiberized particles.

In this application, a certain extrusion force and shear force are applied to the material flowing through the infeed gap 102 by the fiberizing rollers 101 disposed opposite to each other, so that the material is fiberized without being subjected to strong impact. This may not only effectively fiberize the material, but also avoid the damage of material particles caused by strong impact. At the same time, the shredding component 302 in the cutting screening mechanism 300 may break the pre-fiberized material flowing out from the outfeed port 1022 to avoid material agglomeration. The screen 303 in the cutting screening mechanism 300 may control the particle size of the material falling from the bottom of the stock bin 301, thereby improving the particle size consistency of the pre-fiberized particles.

The fiberizing equipment of the disclosure provides a low-shear but efficient fiberization method, while also integrating granulation functionality. This significantly enhances the fiberization efficiency of dry mixtures in the dry electrode process. The equipment produces pre-fiberized material with controllable particle size and uniform dispersion, ensuring the efficient production of dry electrodes.

FIG. 4 shows a structural schematic diagram of a fiberizing equipment of an embodiment of the disclosure (the infeed mechanism 200 is not shown).

In some embodiments, referring to FIG. 4, the fiberizing mechanism 100 further includes two driving members 103, which are respectively connected to the two fiberizing rollers 101, and the driving members 103 are configured to drive the corresponding fiberizing rollers 101 to rotate.

Specifically, the driving member 103 may be a driving motor 304. The two driving members 103 are respectively connected to the two fiberizing rollers 101, that is, the two fiberizing rollers 101 are driven individually by their corresponding driving members 103. In this way, the rotation speeds of the two fiberizing rollers 101 may be controlled separately, so that the shearing force applied to the material by the two fiberizing rollers 101 may be flexibly controlled through the difference in the rotation speeds.

The ratio of the rotational linear speeds of the two fiberizing rollers 101 is controlled to be 1:1.4 to 1:6. In this way, the shear force applied to the material by the two fiberizing rollers 101 with this linear speed difference is moderate, which may ensure that the material may be effectively fiberized while avoiding damage to the material particles caused by excessive shear force.

For example, the ratio of the rotational linear speeds of the two fiberizing rollers 101 may be controlled to be 1:1.4, 1:2, 1:3, 1:4, 1:5, 1:6, etc.

The rotational linear speed of the two fiberizing rollers 101 may be 1 m/min to 200 m/min.

Pressure is applied to the fiberizing roller 101 from the side of each fiberizing roller 101 away from the infeed gap 102, so that the inter-roller linear pressure between the two fiberizing rollers 101 may be 50 kg/cm to 3 t/cm, to ensure that the two fiberizing rollers 101 may apply a certain degree of extrusion force to the material to ensure the fiberization of the material.

The outer surfaces of the two fiberizing rollers 101 are coated (chrome-plated layer, sprayed tungsten carbide layer, etc.) to increase the hardness, so that the surface hardness of the fiberizing rollers 101 is ≥ 60 HRC (room temperature).

In some embodiments, referring to FIG. 4, the cutting screening mechanism 300 further includes a driving motor 304, an output shaft 3041 of the driving motor 304 penetrates the side wall of the stock bin 301 and extends into the stock bin 301, and the shredding component 302 is fixed to the outer wall of the output shaft 3041.

Specifically, the output shaft 3041 of the driving motor 304 penetrates the side wall of the stock bin 301 and extends into the stock bin 301. The shredding component 302 is fixed to the outer wall of the output shaft 3041. In this way, the driving motor 304 may drive the shredding component 302 to rotate. The rotating shredding component 302 may break the material falling into the stock bin 301, thereby preventing agglomeration of the materials which may impact the subsequent film forming process.

Furthermore, the gap between the end of the shredding component 302 away from the output shaft 3041 and the inner wall of the stock bin 301 is 0.1 mm to 1 mm. In this way, the gap between the end of the shredding component 302 away from the output shaft 3041 and the inner wall of the stock bin 301 is very small, ensuring that the material will not pass through the gap between the shredding component 302 and the inner wall of the stock bin 301, and preventing agglomerated materials from passing through the gap and affecting the breaking effect of the material.

In some embodiments, referring to FIG. 4, multiple shredding components 302 are provided, and the shredding components 302 are disposed at intervals along the extension direction of the output shaft 3041. In this way, the shredding components 302 may be evenly distributed in the extension direction of the output shaft 3041 to cover the entire stock bin 301 as much as possible. This ensures that almost all the material may be broken by the shredding components 302, preventing the agglomerated material from falling without being broken by the shredding components 302, ensuring the breaking effect, and preparing the material for the subsequent screening by the screen 303.

In some embodiments, multiple screens 303 are provided. The screens 303 are disposed at intervals along the direction from the infeed mechanism 200 to the cutting screening mechanism 300, and the aperture size of the screen openings in the screens 303 gradually decreases.

Specifically, the aperture size of the screen 303 close to the infeed mechanism 200 is larger, and the aperture size of the screen 303 away from the infeed mechanism 200 is smaller. Consequently, material broken by the shredding component 302 first passes through the screen 303 with a larger aperture size. The screen 303 with a larger aperture size performs a preliminary screening, retaining material with exceedingly large dimensions. Material that is not excessively large passes through this screen 303 and falls onto the next layer of screen 303. Since the aperture size of the next layer of screen 303 is smaller, the next layer of screen 303 may perform a secondary screening on the material, retaining the material with a larger particle size on the screen 303, and the material with a smaller particle size falls through the screen 303 and falls into the next layer of screen 303. This process continues until the material falling from the last layer of screen 303 is the material that ultimately falls from the bottom of the stock bin 301.

The configuration of the multiple layers of screen 303 may facilitate multiple fine screenings of the material, thereby ensuring the uniformity of the particle size of the material ultimately falling from the bottom of the stock bin 301. Furthermore, the configuration of multiple layers of screen 303 may alleviate the screening pressure of each layer of screen 303 and prevent too much material from remaining on a certain layer of screen 303 and affecting the screening of subsequent materials.

By way of example, two screens 303 may be provided, and the two screens 303 are respectively a first screen and a second screen. The first screen is disposed close to the infeed mechanism 200, and the second screen is disposed far away from the infeed mechanism 200. Then, the aperture size of the first screen is greater than the aperture size of the second screen. After two screenings by the first screen and the second screen, the uniformity of the particle size of the material ultimately falling from the bottom of the stock bin 301 may be ensured.

In some embodiments, a heating element is provided inside each fiberizing roller 101, and the heating element is configured to heat the fiberizing roller 101.

Specifically, the heating element may be a resistance wire or a heating interlayer. The resistance wire is configured to electrically heat the fiberizing roller 101. The heating interlayer is configured to introduce a heating medium to heat the fiberizing roller 101. The heating medium may be hot water or hot oil.

The fiberizing roller 101 is heated by the heating element, so that the material may be heated when it contacts the fiberizing roller 101. The viscosity of the heated material is enhanced, which is beneficial to the fiberization of the material.

For example, the temperature of the heating medium may be between room temperature and 250°C.

In some embodiments, a cooling interlayer is provided in the stock bin 301, and the cooling interlayer is configured to introduce a cooling medium.

Specifically, the cooling medium may be cold water.

By introducing cooling into the cooling interlayer, the temperature of the stock bin 301 may be lowered, so that after the material enters the stock bin 301, it will be cooled by the stock bin 301. The viscosity of the material after the temperature is lowered is reduced and the fluidity is increased. On one hand, the fluidity of the material may be improved, so that the material may pass smoothly through the shredding component 302 and the screen 303. On the other hand, it may also prevent the material from agglomerating again during the subsequent feeding in the film-forming process, thereby ensuring that the material maintains a uniform particle size for the subsequent film forming process. For example, the temperature of the cooling medium may be between 20°C and 10°C.

In some embodiments, the size of the infeed gap 102 is 100 µm to 5000 µm; and/or the outer diameter of the fiberizing roller 101 is 100 to 600 mm; and/or the aperture size of the screen opening of the screen 303 is less than or equal to 500 meshes.

Specifically, the size of the infeed gap 102 is 100 um to 5000 um, such that the feed amount in the infeed gap 102 is moderate, thereby ensuring the fiberization effect. If the size of the infeed gap 102 is too large, the feed amount will be too large, resulting in poor fiberization effect; if the infeed gap 102 is too small, the feed amount will be too small, resulting in excessive extrusion force or shear force on the material, causing damage to the material particles. For example, the size of the infeed gap 102 may be 100 um, 500 um, 1000 um, 2000 um, 3000 um, 4000 um, 5000 um, etc.

The outer diameter of the fiberizing roller 101 is 100 to 600 mm. Such an appropriate outer diameter of the fiberizing roller 101 ensures the stability of the fiberizing roller 101 during rotation, and the fiberizing roller 101 may provide a good shearing effect. For example, the outer diameter of the fiberizing roller 101 may be 100 mm, 200 mm, 300 mm, 400 mm, 500 mm, 600 mm, etc.

The aperture size of the screen openings of the screen 303 is less than or equal to 500 meshes, so that the particle size of the material falling from the screen 303 is uniform, which is beneficial to the subsequent film forming process.

To sum up, the fiberizing apparatus of the disclosure may optimize the fiberizing effect by controlling the temperature of the fiberizing roller, the size of the infeed gap between the two fiberizing rollers, and the difference in the rotational linear speeds of the two fiberizing rollers.

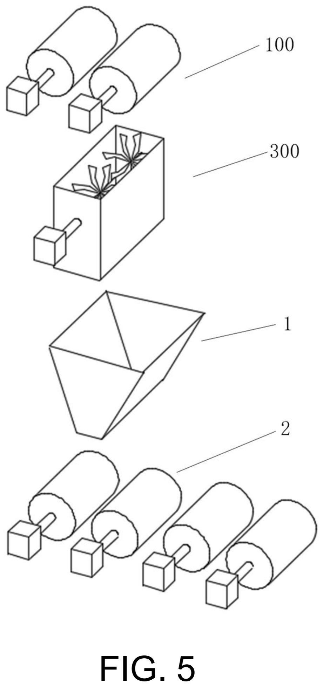

FIG. 5 shows a structural schematic diagram of a dry film forming equipment of an embodiment of the disclosure.

Referring to FIG. 5, a dry film forming equipment is further provided in the disclosure, and the dry film forming equipment includes the aforementioned fiberizing equipment described in any one of the embodiments of the first aspect. The dry film forming equipment further includes a feeding mechanism 1 and a film forming mechanism 2.

The feeding mechanism 1 is located below the cutting screening mechanism 300. The feeding mechanism 1 includes a feeding channel. The feeding channel includes a feeding port, a feeding gap, and a discharge port disposed in sequence. The feeding channel is configured to allow material flowing out of the cutting screening mechanism 300 to enter from the feeding port and flow out through the discharge port along the feeding gap.

The film forming mechanism 2 is located below the discharge port and is configured to receive the material flowing out of the discharge port and calender the material into a finished film.

Specifically, the feeding mechanism 1 is located below the cutting screening mechanism 300, and the pre-fiberized material flowing out of the cutting screening mechanism 300 enters from the feeding port of the feeding mechanism 1 and flows out through the discharge port along the feeding gap. The material flowing out of the discharge port enters the film forming structure, and the film forming mechanism 2 calenders the material so that the material is ultimately formed into a finished film.

The film forming mechanism 2 may include multiple film forming rollers disposed in sequence, with a film forming gap between two adjacent film forming rollers. The material flowing out from the discharge port enters the first film forming gap. Under the joint action of the two rotating adjacent film forming rollers, the material entering the first film forming gap is rolled into an initial film. Driven by the rotating film forming rollers, the initial film enters the subsequent multiple film forming gaps in sequence, and is ultimately formed into a finished film after being calendered, corrected and spread by the subsequent multiple film forming rollers. Then, the finished film is bonded to the current collector to form the final electrode plate.

In the dry film forming equipment of the disclosure, since the fiberizing equipment may provide pre-fiberized materials with uniform particle size, the material particles entering the feeding mechanism 1 and the film forming mechanism 2 for film formation have good consistency, thereby improving the consistency of the final prepared finished film and electrode plate.

## Claims

1. A fiberizing equipment, comprising:
a fiberizing mechanism (100), comprising two fiberizing rollers (101) disposed opposite to each other, wherein an infeed gap (102) is formed between the two fiberizing rollers (101), the infeed gap (102) comprises an infeed port (1021) and an outfeed port (1022);
an infeed mechanism (200), located above the infeed port (1021) and configured to feed material to the infeed port (1021);
a cutting screening mechanism (300), located below the outfeed port (1022), comprising a stock bin (301), a shredding component (302) and a screen (303), wherein the shredding component (302) and the screen (303) are both located in the stock bin (301), the screen (303) is located below the shredding component (302), the stock bin (301) is configured to receive material flowing out of the outfeed port (1022), the shredding component (302) is configured to break the material received by the stock bin (301), and the screen (303) is configured to screen (303) the material broken by the shredding component (302).

2. The fiberizing equipment according to claim 1, wherein the fiberizing mechanism (100) further comprises two driving members (103), the two driving members (103) are respectively connected to the two fiberizing rollers (101), the driving members (103) are configured to drive the corresponding fiberizing rollers (101) to rotate.

3. The fiberizing equipment according to claim 1, wherein the cutting screening mechanism (300) further comprises a driving motor (304), an output shaft (3041) of the driving motor (304) penetrates a side wall of the stock bin (301) and extends into the stock bin (301), the shredding component (302) is fixed to the output shaft (3041).

4. The fiberizing equipment according to claim 3, wherein a plurality of the shredding components (302) are provided, the shredding components (302) are disposed at intervals along an extension direction of the output shaft (3041).

5. The fiberizing equipment according to claim 1, wherein a plurality of the screens (303) are provided, the screens (303) are disposed at intervals along a direction from the infeed mechanism (200) to the cutting screening mechanism (300), an aperture size of screen openings in the screens (303) gradually decreases.

6. The fiberizing equipment according to claim 1, wherein a heating element is provided inside each of the fiberizing rollers (101), the heating element is configured to heat the fiberizing rollers (101).

7. The fiberizing equipment according to claim 1, wherein a cooling interlayer is provided in the stock bin (301), the cooling interlayer is configured to introduce a cooling medium.

8. The fiberizing equipment according to claim 1, wherein an outer diameter of the fiberizing rollers (101) is 100 to 600 mm; and/or an aperture size of screen openings of the screen (303) is less than or equal to 500 meshes.

9. A dry film forming equipment, comprising the fiberizing equipment according to any one of claims 1-8.

10. The dry film forming equipment according to claim 9, further comprising a feeding mechanism (1) and a film forming mechanism (2);
wherein the feeding mechanism (1) is located below the cutting screening mechanism (300), the feeding mechanism (1) comprises a feeding channel, the feeding channel comprises a feeding port, a feeding gap, and a discharge port disposed in sequence, the feeding channel is configured to allow the material flowing out of the cutting screening mechanism (300) to enter from the feeding port and flow out through the discharge port along the feeding gap;
wherein the film forming mechanism (2) is located below the discharge port and is configured to receive the material flowing out of the discharge port and calender the material into a finished film.
